(19) Europäisches Patentamt
European Patent Office
Office européen des brevets

(11) **EP 1 375 867 B1**

(12) **EUROPÄISCHE PATENTSCHRIFT**

(45) Veröffentlichungstag und Bekanntmachung des Hinweises auf die Patenterteilung:
**06.08.2008  Patentblatt 2008/32**

(51) Int Cl.:
***F02C 7/143*** *(2006.01)*

(21) Anmeldenummer: **03405413.0**

(22) Anmeldetag: **10.06.2003**

(54) **Verfahren zur Zwischenkühlung sowie Gasturbinenanlage mit Zwischenkühlung**

Intercooling process and intercooled gas turbine engine

Procédé de refroidissement intermédiaire et turbine à gaz avec refroidissement intermédiaire

(84) Benannte Vertragsstaaten:
**AT BE BG CH CY CZ DE DK EE ES FI FR GB GR HU IE IT LI LU MC NL PT RO SE SI SK TR**

(30) Priorität: **28.06.2002  DE 10228986**

(43) Veröffentlichungstag der Anmeldung:
**02.01.2004  Patentblatt 2004/01**

(73) Patentinhaber: **Alstom Technology Ltd**
**5400 Baden (CH)**

(72) Erfinder:
• **Jansohn, Peter, Dr.**
**79790 Küssaberg (DE)**
• **Ni, Alexander, Prof. Dr.**
**5400 Baden (CH)**
• **Savic, Sasha, Dr.**
**5430 Wettingen (CH)**

(56) Entgegenhaltungen:
**EP-A- 0 903 483          WO-A-00/60226**
**DE-A1- 2 925 091          US-A- 2 678 531**

**Beschreibung**

**Technisches Gebiet**

Die Erfindung geht aus von einem Verfahren zur Zwischenkühlung der Verdichterluft einer Gasturbinenanlage nach dem Oberbegriff des ersten Anspruches. Die Erfindung betrifft ebenfalls eine Gasturbinenanlage mit Zwischenkühlung der Verdichterluft nach dem Oberbegriff des unabhängigen Vorrichtungsanspruches.

**Stand der Technik**

Es ist aus dem Stand der Technik seit langem bekannt, beim Betrieb einer Gasturbinenanlage die Verdichterluft zu kühlen, um auf diese Weise den Massenstrom im Verdichter zu erhöhen bzw. die Verdichterarbeit zu verringern. US 2678531 regt in diesem Zusammenhang an, die Verdichtung der Ansaugluft zwei- oder mehrstufig mit jeweils einer Zwischenkühlung zwischen den Stufen auszuführen. In dieser Publikation werden auch die Alternativen einer indirekten und einer direkten Kühlung, letztere als Wassereinspritzung ausgestaltet, diskutiert.

Aus der EP 0 516 995 A1 ist eine Gasturbinenanlage bekannt geworden, bei der zur Maximierung des Wirkungsgrades eine Zwischenkühlung und eine Zwischenerhitzung vorgesehen sind. Die Gasturbinenanlage besteht dazu aus zwei Verdichtern, aus zwei Brennkammern und zwei Turbinen. Der Zwischenkühler ist zwischen dem ersten Verdichter und dem zweiten Verdichter angeordnet. Im Zwischenkühler wird die im ersten Verdichter verdichtete Luft gekühlt und die überschüssige Wärme an Wasser abgegeben. Die gekühlte verdichtete Luft wird dann im zweiten Verdichter weiter verdichtet. Durch die Zwischenkühlung wird der Wirkungsgrad erhöht, da die zur Verdichtung der Luft im zweiten Verdichter benötigte Arbeit reduziert wird.

Aus der EP 0 770 771 A1 ist ein zwischengekühlter Verdichter bekannt, bei dem zur Kühlung Wasser in die Verdichterstufen eingespritzt wird. Zur weiteren Kühlung ist zwischen der ersten und der zweiten Verdichterstufe ein Zwischenkühler angeordnet.

Nach der Lehre gemäss EP 0 903 483 A1 wird in eine Rohrleitung zwischen den beiden Verdichterstufen das Wasser in feinen Tröpfchen derart in den Gasstrom eingespritzt, dass ein möglichst hoher Anteil des eingespritzten Wassers verdampft ist, bevor es auf Anlagenteile trifft. Auf diese Weise soll verhindert werden, dass sich Wasserniederschläge an Anlagenteilen ausbilden können.

**Darstellung der Erfindung**

Der Erfindung liegt die Aufgabe zugrunde, bei einem Verfahren und einer Vorrichtung zur Zwischenkühlung der Verdichterluft einer Gasturbinenanlage der eingangs genannten Art, die Zwischenkühlung dahingehend zu verbessern, dass ein höherer Wirkungsgrad der Gasturbinenanlage erzielt wird.

Erfindungsgemäss wird dies durch ein Verfahren und eine Vorrichtung der in den unabhängigen Ansprüchen genannten Art erreicht.

Der Kern der Erfindung besteht darin, dass die zumindest annähernd isentrope Zwischenkühlung dergestalt erfolgt, dass das Kühlmedium, welches vorzugsweise Wasser ist, in einen Bereich des Zwischenkühlers eingedüst wird, in welchem das zu kühlende Medium eine höhere Machzahl aufweist als vor dem Eintritt in den Zwischenkühler.

Die Vorteile der Erfindung sind unter anderem darin zu sehen, dass durch die zumindest teilweise isentrope Zwischenkühlung der Gesamtwirkungsgrad der Gasturbinenanlage verbessert wird. Diese Verbesserung ist umso höher, je näher man sich der vollständig isentropen Zwischenkühlung annähert. Durch den verbesserten Wirkungsgrad wird die Umweltbilanz der Gasturbinenanlage verbessert, da im Vergleich zur gewonnenen Leistung viel weniger Schadstoffe produziert werden.

Weitere vorteilhafte Ausgestaltungen und Vorteile der Erfindung ergeben sich aus den Unteransprüchen und der Beschreibung.

**Kurze Beschreibung der Zeichnung**

Im folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung der Medien ist mit Pfeilen angegeben.

Es zeigen:

Fig. 1    eine Gasturbinenanlage mit Zwischenkühler nach dem Stand der Technik;
Fig. 2    ein P-V-Diagramm eines Zyklusses mit Zwischenkühlung;
Fig. 3    ein T-S-Diagramm eines Zyklusses mit Zwischenkühlung;

Fig. 5     Druckanstieg aufgrund der isentropen Zwischenkühlung;

Fig. 6     Wirkungsgrad des Gasturbinenprozesses für verschiedene Zwischenkühlungsverfahren, Wasserkonzentration 3%;

Fig. 7     Einfluss auf den Wirkungsgrad des Gasturbinenprozesses bei isentroper Zwischenkühlung mit verschiedenen Wasserkonzentrationen;

Fig. 8     Abhängigkeit des Wirkungsgrads $\eta$ des Gasturbinenkreisprozesses von der Annäherung an die ideale isentrope Zwischenkühlung;

Fig. 9     Schematische Darstellung der isentropen Zwischenkühlung;

Fig. 10    eine erfindungsgemässe Gasturbinenanlage mit isentroper Zwischenkühlung.

Es sind nur die für das unmittelbare Verständnis der Erfindung wesentlichen Elemente gezeigt.

**Weg zur Ausführung der Erfindung**

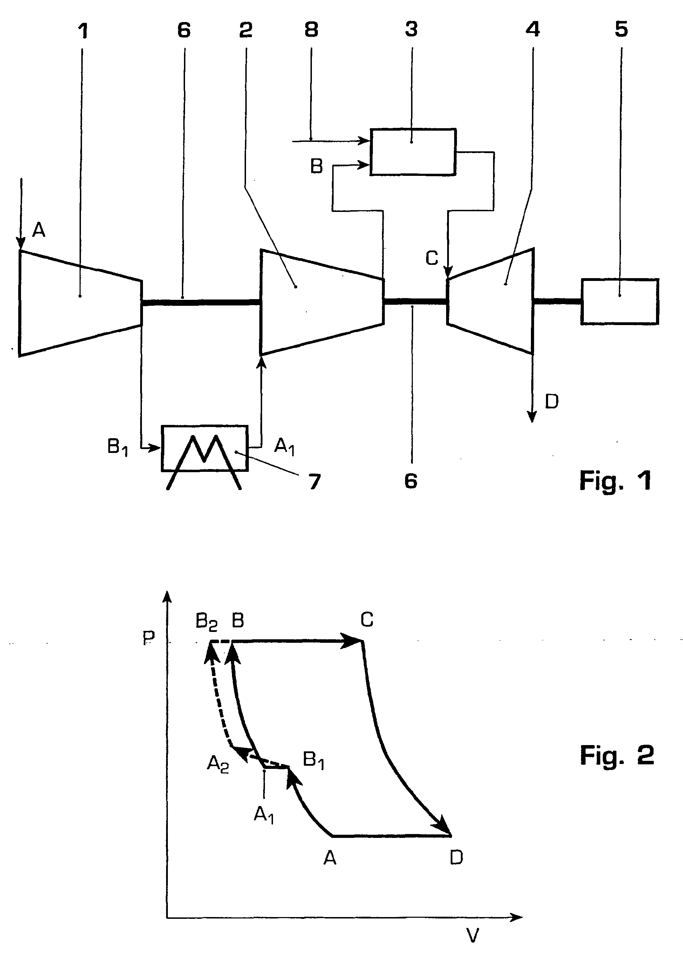

Fig. 1 zeigt eine an sich bekannte Gasturbinenanlage, umfassend einen ersten Verdichter 1, einen zweiten Verdichter 2, eine Brennkammer 3, eine Turbine 4 und einen mit dieser Turbine gekoppeltem Generator 5. Die Strömungsmaschinen 1, 2 und 4 und der Generator 5 sind über eine Welle 6 gekoppelt, wobei eventuell entsprechende Getriebe zwischengekoppelt sind. Luft wird vom Verdichter 1 angesaugt, verdichtet und einem Zwischenkühler 7 zugeführt. Im Zwischenkühler wird die durch die Verdichtung im ersten Verdichter 1 erwärmte Luft gekühlt und dann dem zweiten Verdichter 2 zugeführt und dort weiter verdichtet. Die so verdichtete Luft wird nun einer Brennkammer zugeführt und dort mit Brennstoff 8 verbrannt. Die Verbrennungsgase werden arbeitsleistend in der Turbine 4 entspannt. Die von der Turbine 4 abgegebene Arbeit wird mittels des Generators 5 in elektrische Energie umgewandelt.

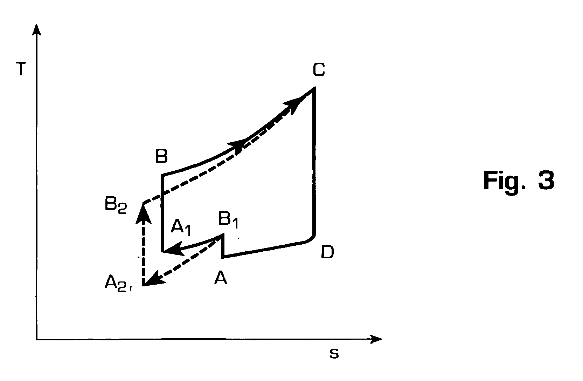

In Fig. 2 ist in einem Druck-Volumen-Diagramm (P-V-Diagramm) und in Fig. 3 in einem Temperatur-Entropie-Diagramm (T-S-Diagramm) der gemäss Fig. 1 durchgeführte Kreisprozess mit ausgezogenen Linien gezeigt, wobei mit S die Entropie des idealen Gases und nicht eines Mischgases oder eines realen Gases angegeben ist. Diese in den Figuren gezeigten Kreisprozesse entsprechen im wesentlichen dem bekannten Kreisprozess nach Brayton. Somit wird die idealisierte Annahme gemacht, dass das Arbeitsmedium während des gesamten Kreisprozesses ein ideales Gas ist. Der Verbrennungsprozess wird angenähert, indem bei konstantem Druck Wärme zugeführt wird, und das Abgas, hier die erwärmte Luft, wird bei konstantem Druck abgekühlt und wieder dem Verdichter zugeführt. Somit ergibt sich in der Zusammenschau von Fig. 1, 2 und 3, dass von A nach B1 eine adiabatische Verdichtung erfolgt, von B1 nach A1 die Zwischenkühlung bei konstantem Druck mit Wärmeabgabe, von A1 nach B wieder eine adiabatische Verdichtung, von B nach C Wärmezugabe bei konstantem Druck, von C nach D adiabatische Expansion und von D nach A Wärmeabgabe bei konstantem Druck. Als Näherung für des reale System kann somit angenommen werden, dass die Zwischenkühlung bei konstantem Druck erfolgt. Im realen System wird dazu die durch die Verdichtung erwärmte Luft im Zwischenkühler 7 gekühlt, was auf verschiedenen Arten erfolgen kann. Ein üblicher Weg ist z.B. die Einspritzung von kleinen Wassertropfen in die erhitzte Luft, die Tropfen verdampfen und kühlen die Luft. Das Gesamtsystem aus Luft und eingespritztem Wasser ist jedoch viel komplexer und der Gleichgewichtszustand dieses Mischungssystem ist dabei abhängig von verschiedensten Ausgangsgrössen wie z.B. Grösse der Wassertropfen, Temperatur und Geschwindigkeit der verdichteten Luft, usw. Der Kühleffekt ist hier jedoch der Haupteffekt.

Um die Effizienz dieses thermodynamischen Prozesses der Zwischenkühlung zu verbessern, wird nun vorgeschlagen, die Entropie des realen Systems bei der Zwischenkühlung konstant zu halten. Genauer heisst das, dass die Entropie des Mischungssystem bei der Zwischenkühlung im Endzustand der Summe der Entropien der Komponenten vor der Mischung entsprechen muss.

In den Fig. 2 und 3 ist nun für ein ideales System mit den oben beschriebenen Annahmen für ein ideales System eine isentrope Zwischenkühlung von B1 zu A2 gezeigt, wobei sich hier der Begriff isentrope Zwischenkühlung nicht auf das ideale Gas, sondern auf das reale Gesamtmischungssystem mit Zugabe eines Kühlmediums bezieht. Von A2 nach B2 erfolgt dann die adiabatische Verdichtung im zweiten Verdichter und von B2 nach C die Wärmezugabe bei konstantem Druck.

Somit ergibt sich, dass die in den Fig. 2 und 3 von einem Kreisprozess mit isentroper Zwischenkühlung beschriebene Fläche deutlich grösser ist als bei herkömmlichen Prozessen, und somit die geleistete Arbeit und damit der Wirkungsgrad einer solchen Gasturbinenanlage verbessert wird.

Die Bedingungen, die in einem realen System eingehalten werden müssen, um eine isentrope Zwischenkühlung zu erhalten, sollen nun durch theoretische Überlegungen bestimmt werden.

Für die folgenden Berechnungen wird als Näherung angenommen, dass bei den hier vorkommenden Temperatur- und Druckbereichen Luft ein ideales Gas, Wasser inkompressibel und die latente Wärme konstant ist.

Die Entropie des idealen Gases ist $s = \dfrac{R}{\gamma - 1} \ln \dfrac{pV^{\gamma}}{p_0 V_0^{\gamma}}$ , wobei mit Subskript 0 Referenzgrösen bezeichnet werden.

Die Enthalpie von Wasser ist $h_w = c_w T + \dfrac{p}{\rho}$ .

Nach dem ersten Hauptsatz der Thermodynamik $dh_W = Vdp + Tds$ folgt somit, dass $c_w dT = Tds$ und die Entropie von Wasser ist somit $s = c_w \ln \dfrac{T}{T_0}$ .

Die Entropie von Dampf nach dem Verdampfen ist $s = c_w \ln \dfrac{T}{T_0} + \dfrac{q}{T}$ , wobei mit q die latente Wärme angegeben wird.

Somit ist der Zustand von konstanter Entropie der Mischung

$$m_g \frac{R}{\gamma - 1} \ln \frac{p_g V_g^{\gamma}}{p_0 V_0^{\gamma}} + m_w c_w \ln \frac{T_w}{T_0} = m_g \frac{R}{\gamma - 1} \ln \frac{pV^{\gamma}}{p_0 V_0^{\gamma}} + m_w \left( c_w \ln \frac{T}{T_0} + \frac{q}{T} \right) \qquad (1)$$

Unter der Annahme, dass das System adiabatisch ist, bleibt die Enthalpie während des Prozesses konstant

$$m_g c_P T + m_w \left( c_w T + \frac{p}{\rho_w} + q \right) = m_g c_P T_g + m_w \left( c_w T_w + \frac{p_w}{\rho_w} \right)$$

Daraus folgt, dass die Temperatur nach dem Mischvorgang bei der Zwischenkühlung entsprechend der nachfolgenden Formel bestimmt werden kann:

$$T = \frac{m_g c_P T_g + m_w \left( c_w T_w + \frac{p_w}{\rho_w} - \frac{p}{\rho_w} - q \right)}{m_g c_P + m_w c_w} \qquad (2)$$

Die Mischungsparameter für die Zwischenkühlung im Gleichgewichtszustand werden somit durch die Gleichungen (1) und (2) beschrieben.

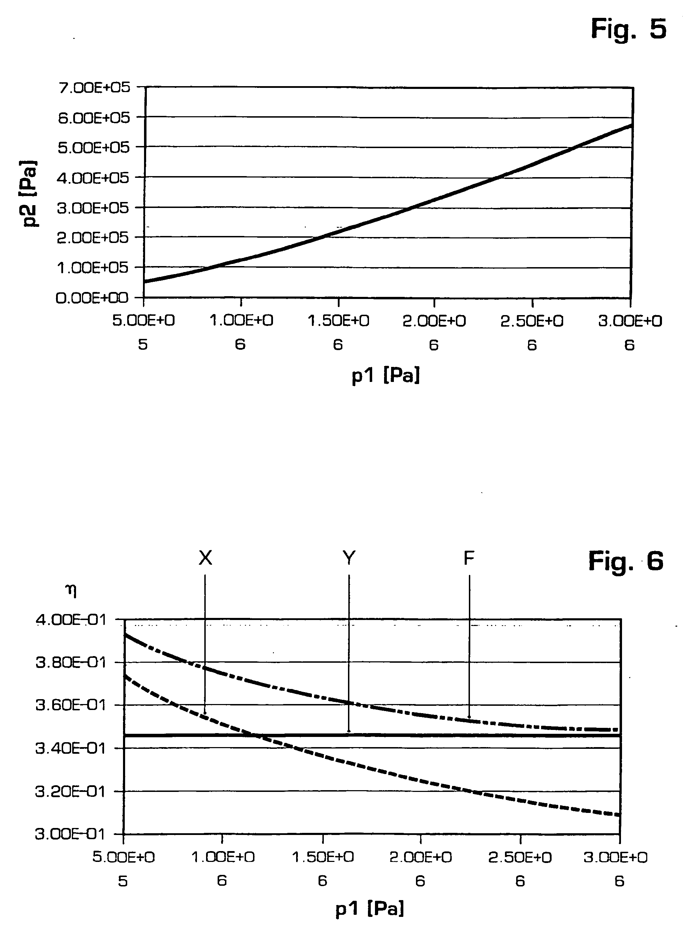

Die den Fig. 5 bis 7 zeigen die aus den oben dargelegten Berechnungen resultierenden Vorteile einer isentropen Zwischenkühlung im Vergleich zu bekannten Systemen. Die Verdichtung erfolgt dabei in zwei Stufen, der Druck nach der ersten Verdichterstufe ist p1. Zur Berechnung wurde ein Wirkungsgrad des Verdichters von $\eta_C$ = 87% und ein Wirkungsgrad der Turbine von $\eta_T$ = 87% angenommen.

Fig. 5 zeigt die Abhängigkeit der Druckzunahme p2 aufgrund der isentropen Vermischung gegen die adiabatische Verdichtung p1 im ersten Verdichter, die Wasserkonzentration ist 3%. Es wird deutlich, dass der Druckanstieg durch die isentrope Verdichtung bei der isentropen Vermischung relativ hoch ist.

In Fig. 6 wird der thermodynamische Wirkungsgrad $\eta$ des Gasturbinenkreisprozesses für verschiedene Zwischenkühlungsverfahren verglichen. Die Kurve X zeigt eine Zwischenkühlung bei konstantem Druck, die Kurve F die isentrope Zwischenkühlung und die Kurve Y den Brayton Prozess. Die Wasserkonzentration liegt bei 3%. Es ist ersichtlich, dass durch die isentrope Zwischenkühlung die Effizienz des Prozesses verbessert wird im Vergleich zu den anderen Prozessen.

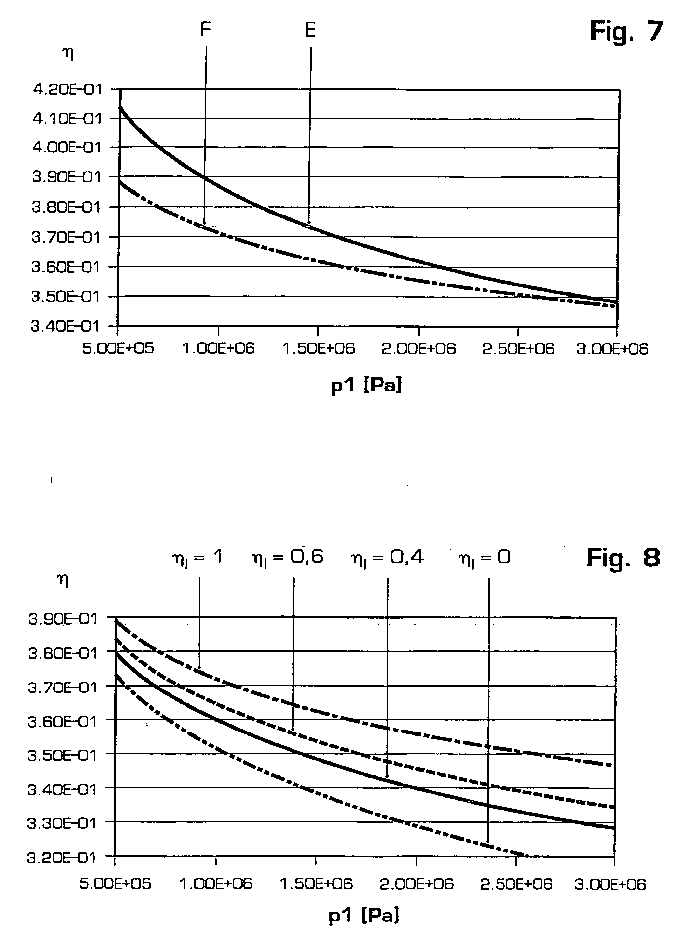

In Fig. 7 wird der Einfluss der Wasserkonzentration bei einer isentropen Zwischenkühlung auf den Wirkungsgrad $\eta$ des Gasturbinenkreisprozesses dargestellt, die Kurve E zeigt eine Wasserkonzentration von 5%, die Kurve F eine Wasserkonzentration von 3%. Es ist deutlich zu sehen, dass der Wirkungsgrad η des Gasturbinenkreisprozesses mit zunehmender Wasserkonzentration zunimmt. Der Brayton Prozess wird dabei um mindestens 8% übertroffen und auch der Prozess mit isobarer Zwischenkühlung wird deutlich verbessert.

Fig. 8 zeigt die Abhängigkeit des Wirkungsgrad η des Gasturbinenkreisprozesses von der Annäherung an die ideale isentrope Zwischenkühlung. Zur Berechnung wurde angenommen, dass die Änderung der Entropie bei einer isobaren Zwischenkühlung $\Delta S_P$ sei. Im real anzutreffenden Fall einer isentropen Zwischenkühlung ändert sich die Entropie um $\Delta S_R = (1 - \eta_I)\Delta S_P$, wobei $0 \leq \eta_I \leq 1$. Der Fall $\eta_I = 0$ entspricht der isobaren Zwischenkühlung, der Fall $\eta_I = 1$ entspricht der isentropen Zwischenkühlung da dann $\Delta S_R = 0$. Somit bezeichnet der Parameter $\eta_I$ die Wertigkeit des Zwischenkühlungsprozesses und kann als Wirkungsgrad der Zwischenkühlung bezeichnet werden. Es zeigt sich somit, dass bereits bei kleinen Werten des Wirkungsgrads der Zwischenkühlung $\eta_I$ ein deutlich höherer Wirkungsgrad als bei der isobaren Zwischenkühlung mit $\eta_I = 0$ erzielt wird.

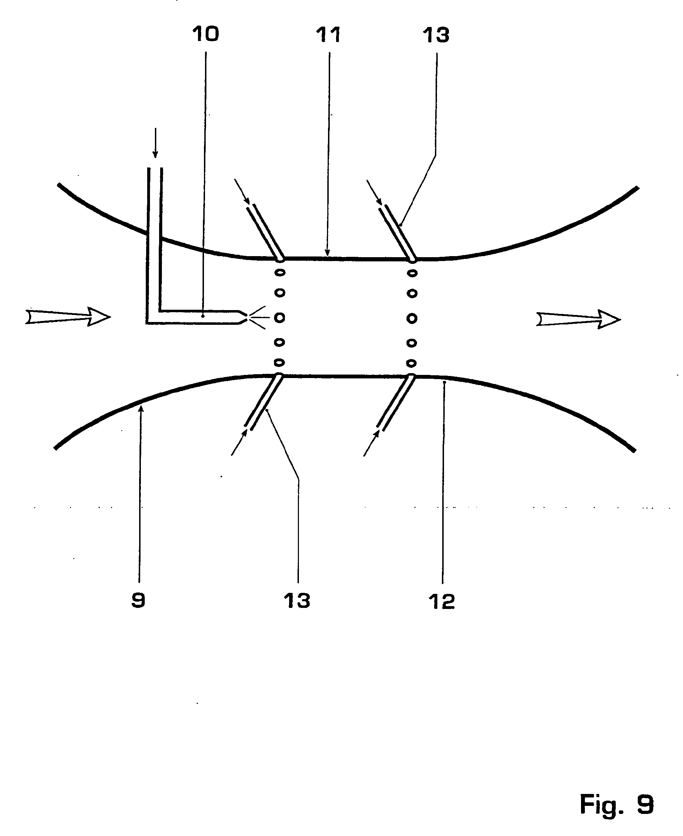

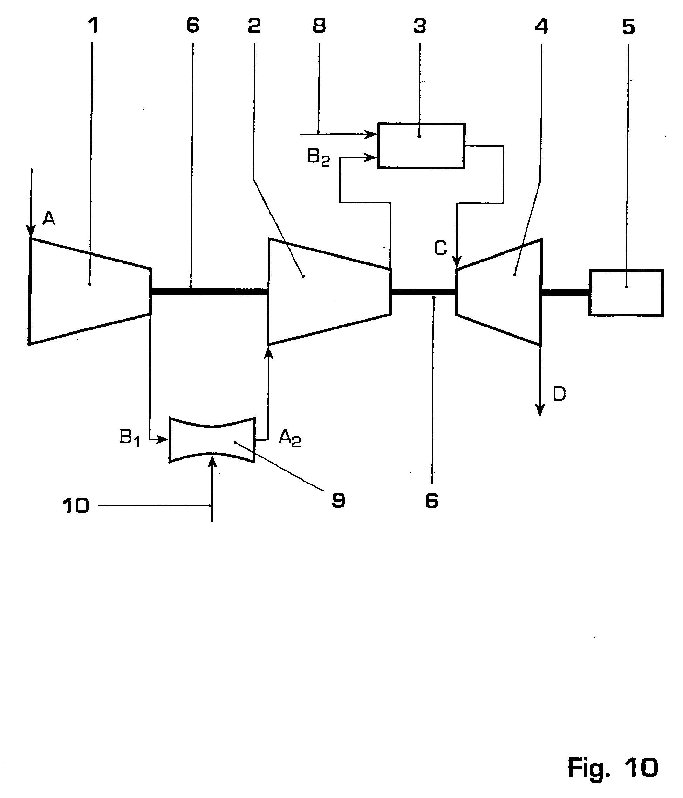

Der oben analysierte thermodynamische Prozess der isentropen Zwischenkühlung kann durch die in Fig. 9 und 10 wiedergegebene Vorrichtung technisch umgesetzt werden. Die Gasturbinenanlage entspricht im wesentlichen derjenigen, die in Fig. 1 beschrieben wurde. Der dort verwendete Zwischenkühler wird durch einen düsenförmigen Zwischenkühler 9 ersetzt, wie er in Fig. 9 schematisch dargestellt ist. Die vom ersten Verdichter eintretende verdichtete Luft wird durch eine Verengung 11 des düsenförmigen Zwischenkühlers beschleunigt und der Druck erhöht. Nach der Verengung 11 erweitert sich der Querschnitt der Düse 9 wieder, so dass im wesentlichen die gleiche Machzahl wie vor dem Eintritt in die Düse erhalten wird. Im Bereich der Verengung kann über eine Leitung eine Wassereinspritzung 10 direkt ins innere erfolgen. Die Wassereindüsung kann jedoch auch über seitlich an der Innenwandung 12 des düsenförmigen Zwischenkühlers angeordnete Wassereindüsungen 13 erfolgen. Nicht dargestellt ist als weitere Ausführungsform die Ausgestaltung des Zwischenkühlers 9 toroidal die Welle 6 umschliessend.

Die Auslegung des düsenförmigen Zwischenkühlers 9 kann nach folgenden Gesichtspunkten erfolgen:

Nach der Strömungsmechanik kann der Staudruck der der Kühlung unterworfenen Strömung beschrieben werden durch

$$\frac{dp_T}{dt} = -\frac{\gamma M^2}{2} \frac{p_T \dot{q}}{H_0\left[1 + \frac{M^2}{2}(\gamma - 1)\right]}$$

wobei $p_T$ der Staudruck, M die Machzahl, $H_0$ die thermische Enthalpie und q die Abkühlungsrate ist. Um den Druckgewinn möglichst gross ausfallen zu lassen, muss somit die Machzahl möglichst gross gewählt werden. Untersuchungen haben gezeigt, dass z.B. die Machzahl in der Einengung 11 im Bereich von 0.7 bis 0.9 liegen muss, wenn die Machzahl beim Ein- und Austritt aus dem düsenförmigen Zwischenkühler ungefähr bei 0.3 liegt. Die Düse 9 muss somit so ausgelegt werden, dass hohe Machzahlen im Bereich der Verengung erzielt werden. Die Machzahl am Austritt der Düse kann an sich beliebig eingestellt werden und ist abhängig von den gewünschten Bedingungen am Eintritt in den zweiten Verdichter 2.

**Bezugszeichenliste**

| | |
|---|---|
| 1 | erster Verdichter |
| 2 | zweiter Verdichter |
| 3 | Brennkammer |
| 4 | Turbine |
| 5 | Generator |
| 6 | Welle |
| 7 | Zwischenkühler |
| 8 | Brennstoff |
| 9 | düsenformiger Zwischenkühler |
| 10 | Wassereinspritzung |
| 11 | Einengung |
| 12 | Innenwandung |

13    Wassereindüsung

**Patentansprüche**

**1.** Verfahren zur Zwischenkühlung von Verdichterluft während der Verdichtung bei einer Gasturbinenanlage, wobei die Gasturbinenanlage mindestens einen ersten (1) und einen zweiten Verdichter (2), eine Brennkammer (3) und eine Turbine (4) umfasst, und wobei zwischen dem ersten (1) und dem zweiten Verdichter (2) mindestens ein Zwischenkühler (9) angeordnet ist, und die Zwischenkühlung in dem Zwischenkühler (9) zumindest annähernd isentrop erfolgt, **dadurch gekennzeichnet,** **dass** die Eindüsung eines Kühlmediums in den Zwischenkühler (9) in einem Bereich (11) erfolgt, in dem die Verdichterluft eine höhere Machzahl aufweist als vor dem Eintritt in den Zwischenkühler (9).

**2.** Verfahren zur Zwischenkühlung nach Anspruch 1 oder 2, **dadurch gekennzeichnet,** **dass** die Machzahl der Verdichterluft vor dem Eintritt in den zweiten Verdichter (2) wieder reduziert wird.

**3.** Verfahren zur Zwischenkühlung nach Anspruch 1, **dadurch gekennzeichnet,** **dass** als Kühlmedium Wasser eingedüst wird.

**4.** Gasturbinenanlage mit Zwischenkühlung der Verdichterluft während der Verdichtung, umfassend mindestens einen ersten (1) und einen zweiten Verdichter (2), eine Brennkammer (3), eine Turbine (4) und mindestens einen zwischen dem ersten (1) und dem zweiten Verdichter (2) angeordneten Zwischenkühler (9), welcher Zwischenkühler (9) Mittel (11, 10, 13) zur zumindest annähernd isentropen Zwischenkühlung enthält, **dadurch gekennzeichnet,** **dass** der Zwischen kühler (9) düsenförmig ausgebildet ist und die Mittel zur annähernd isentropen Zwischen kühlung eine Einengung (11) zur Erhöhung der Machzahl der Verdichterluft und Einrichtungen (10, 13) zur Zugabe von Kühlmedium im Bereich dieser Einengung (11) umfassen.

**5.** Gasturbinenanlage mit Zwischenkühlung nach Anspruch 4, **dadurch gekennzeichnet,** **dass** die Einrichtungen (10; 13) zur Zugabe von Kühlmedium den freien Strömungsquerschnitt beaufschlagende oder in der Kühlerwand angeordnete Düsen umfassen.

**6.** Gasturbinenanlage mit Zwischenkühlung nach Anspruch 5, **dadurch gekennzeichnet,** **dass** das Kühlmedium Wasser ist.

**Claims**

**1.** Method for intermediate cooling of compressor air during compression in a gas turbine plant, the gas turbine plant comprising at least one first (1) and one second (2) compressor, a combustion chamber (3) and a turbine (4), and at least one intermediate cooler (9) being arranged between the first (1) and the second (2) compressor, and intermediate cooling taking place at least approximately isentropically in the intermediate cooler (9), **characterized in that** the injection of a cooling medium into the intermediate cooler (9) takes place in a region (11) in which the compressor air has a higher Mach number than before entry into the intermediate cooler (9).

**2.** Method for intermediate cooling according to Claim 1 or 2, **characterized in that** the Mach number of the compressor air is reduced again before entry into the second compressor (2).

**3.** Method for intermediate cooling according to Claim 1, **characterized in that** the cooling medium injected is water.

**4.** Gas turbine plant with intermediate cooling of the compressor air during compression, comprising at least one first (1) and one second (2) compressor, a combustion chamber (3), a turbine (4) and at least one intermediate cooler (9) arranged between the first (1) and the second (2) compressor, which intermediate cooler (9) contains means (11, 10, 13) for at least approximately isentropic intermediate cooling, **characterized in that** the intermediate cooler (9) is of nozzle-shaped design, and the means for approximately isentropic intermediate cooling comprise a contraction (11) for increasing the Mach number of the compressor air and devices (10, 13) for the addition of cooling medium in the region of this contraction (11).

5. Gas turbine plant with intermediate cooling according to Claim 4, **characterized in that** the devices (10; 13) for the addition of cooling medium comprise nozzles acting upon the free flow cross section or arranged in the cooler wall.

6. Gas turbine plant with intermediate cooling according to Claim 5, **characterized in that** the cooling medium is water.


**Revendications**

1. Procédé de refroidissement intermédiaire de l'air de compresseur pendant la compression dans une installation de turbine à gaz, l'installation de turbine à gaz comprenant au moins un premier (1) et un deuxième (2) compresseur, une chambre de combustion (3) et une turbine (4), et au moins un refroidisseur intermédiaire (9) étant disposé entre le premier (1) et le deuxième (2) compresseur, et le refroidissement intermédiaire s'effectuant dans le refroidisseur intermédiaire (9) de manière au moins approximativement isentropique,
   **caractérisé en ce que**
   l'injection d'un fluide de refroidissement dans le refroidisseur intermédiaire (9) s'effectue dans une région (11) dans laquelle l'air de compresseur présente un nombre de Mach plus élevé qu'avant l'entrée dans le refroidisseur intermédiaire (9).

2. Procédé pour le refroidissement intermédiaire selon la revendication 1 ou 2,
   **caractérisé en ce que**
   le nombre de Mach de l'air de compresseur est à nouveau réduit avant l'entrée dans le deuxième compresseur (2).

3. Procédé pour le refroidissement intermédiaire selon la revendication 1,
   **caractérisé en ce que**
   l'on injecte de l'eau en tant que fluide de refroidissement.

4. Installation de turbine à gaz avec refroidissement intermédiaire de l'air de compresseur pendant la compression, comprenant au moins un premier (1) et un deuxième (2) compresseur, une chambre de combustion (3), une turbine (4) et au moins un refroidisseur intermédiaire (9) disposé entre le premier (1) et le deuxième (2) compresseur, lequel refroidisseur intermédiaire (9) contient des moyens (11, 10, 13) pour effectuer un refroidissement intermédiaire de manière au moins approximativement isentropique,
   **caractérisée en ce que**
   le refroidisseur intermédiaire (9) est réalisé en forme de buse et les moyens pour effectuer un refroidissement intermédiaire approximativement isentropique comprennent une constriction (11) pour augmenter le nombre de Mach de l'air de compresseur et des dispositifs (10, 13) pour ajouter du fluide de refroidissement dans la région de cette constriction (11).

5. Installation de turbine à gaz avec refroidissement intermédiaire selon la revendication 4,
   **caractérisée en ce que**
   les dispositifs (10 ; 13) pour ajouter du fluide de refroidissement comprennent des buses sollicitant la section transversale d'écoulement libre ou disposées dans la paroi du refroidisseur.

6. Installation de turbine à gaz avec refroidissement intermédiaire selon la revendication 5,
   **caractérisée en ce que**
   le fluide de refroidissement est de l'eau.

**Fig. 1**

**Fig. 2**

Fig. 3

**Fig. 5**

**Fig. 6**

**Fig. 7**

p1 [Pa]

**Fig. 8**

p1 [Pa]

**Fig. 9**

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2678531 A
- EP 0516995 A1
- EP 0770771 A1
- EP 0903483 A1